# EUROPEAN PATENT APPLICATION

(11) **EP 2 918 868 A1**
(43) Date of publication of application: **16.09.2015**
(21) Application number: 12887885.7
(22) Date of filing: 08.11.2012
(51) Int. Cl.: F16F 7/12

(54) **IMPACT ABSORBING MEMBER**

(71) Applicant: JFE Steel Corporation, Tokyo 100-0011 (JP); Suzuki Motor Corporation, Hamamatsu, Shizuoka 432-8611 (JP)
(72) Inventor: KONDO, Osamu, Tokyo 100-0011 (JP); SUMINO, Taku, Hamamatsu-shi Shizuoka 432-8611 (JP); KURIAGE, Yoshitaka, Hamamatsu-shi Shizuoka 432-8611 (JP)
(74) Representative: Hoffmann Eitle
(86) International application number: PCT/JP2012/079040
(87) International publication number: WO 2014/073084

(57) **Abstract**

A shock absorbing member 1 is a shock absorbing member that absorbs shock energy by plastic deformation in a bellows-like manner when an axial compression load is received and that has a cylindrical shape, and the shock absorbing member 1 is formed of a steel sheet having a tensile strength equal to or greater than 590 MPa. Further, in this shock absorbing member 1, a cross sectional shape orthogonal to an axial direction is a closed cross section that has twelve vertices and that is approximately cross shaped, an angle α formed by straight lines joining vertices at both ends of a slanted side of an octagon formed by connecting with straight lines eight vertices of the twelve vertices to a vertex therebetween is set to be 120° ≤ α ≤ 150°, an aspect ratio of the cross sectional shape is set to be "1:1" to "2:1", and a ratio between a length of a longer one of a vertical side and a horizontal side of the octagon and a length of an oblique side is set to be "1:1" to "1.5:1".

## Description

### Field

The present invention relates to a shock absorbing member that absorbs shock energy.

### Background

Automobiles have members, which absorb energy upon crashworthiness, installed therein. Crash boxes are an example of such members. A crash box is generally cylindrically formed of one member or several members and absorbs shock energy by being deformed in a bellows-like manner in an axial direction when a shock load is applied thereto in the axial direction. Performance required in crash boxes includes stable deformation in a bellows-like manner in an axial direction when a shock load is applied thereto and high energy absorbing efficiency accompanying the deformation. Various proposals have been made in order to improve the performance required in crash boxes.

A crash box having a rectangular or hexagonal cross sectional shape has few ridge lines extending in an axial direction and a length of one side thereof is long, and thus has bad energy absorbing efficiency upon shock absorption. Thus, in Patent Literature 1, a crash box having an octagonal cross sectional shape is proposed. The crash box described in Patent Literature 1 includes stress concentration portions (bead-formed portions) that become starting points of plastic deformation such that the crash box is able to be stably deformed in a bellows-like manner. The stress concentration portions are configured of convex portions formed on an inner side of the crash box and are provided alternately in the axial direction. By providing the stress concentration portions, deformation in a protruding direction of the convex portions is provoked and the crash box is thus stably deformed in a bellows-like manner.

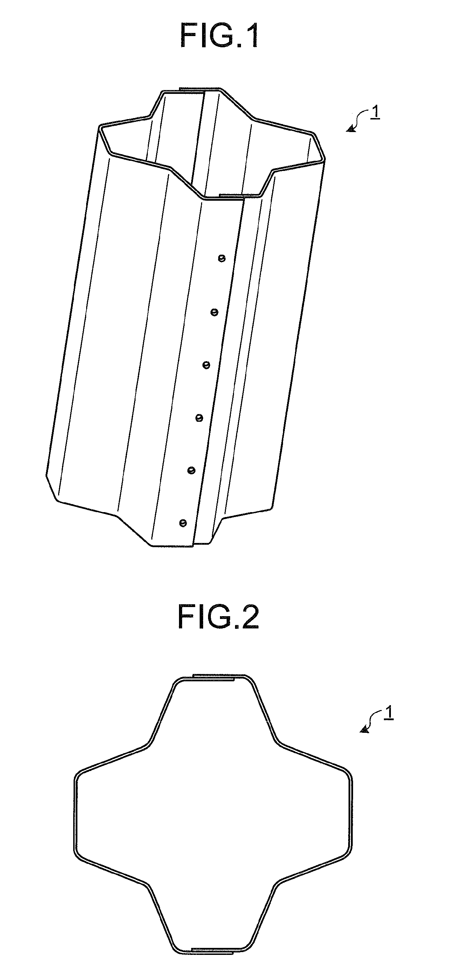

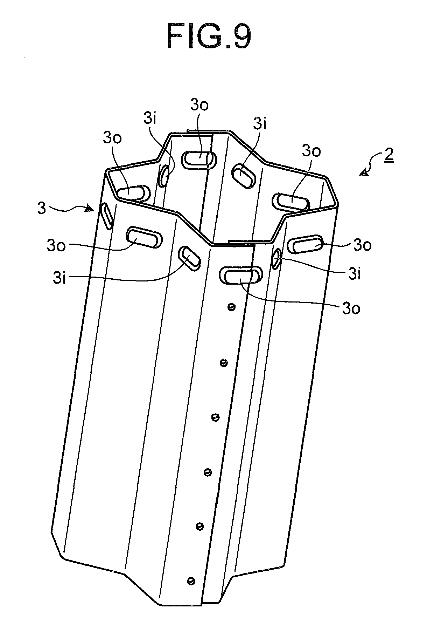

In FIG. 2 of Patent Literature 1, a crash box having two stages of the stress concentration portions provided therein is illustrated, and in FIG. 9 of the same literature, a crash box having seven stages of the stress concentration portions provided therein is illustrated.

### Citation List

### Patent Literature

Patent Literature 1: Japanese Patent Application Laid-open No. 2006-123887

### Summary

### Technical Problem

However, even the crash box described in Patent Literature 1 cannot be said to be sufficiently satisfying the performance required in crash boxes, which is the stable deformation in a bellows-like manner and the high energy absorbing efficiency accompanying the deformation.

That is, even if a cross sectional shape of a crash box is formed into an octagon like the crash box described in Patent Literature 1, in relation to a shape of an end portion of a front side member where the crash box is provided, the cross sectional shape is often made to be a long octagon (an octagon having a pair of opposite sides that are long), rather than a regular octagon. In that case, the long sides still remain and axial force and energy absorbing efficiency are reduced.

Further, in the crash box described in Patent Literature 1, all of the stress concentration portions in the same cross section protrude inwards to provoke deformation in the same direction in the same cross section. However, there is a limit to the energy absorbing efficiency with this deformation in the same direction in the same cross section, and sufficient energy absorption is not always able to be achieved.

Furthermore, when a tensile strength of a steel sheet forming the crash box is increased, the crash box becomes difficult to be deformed and thus if a high strength steel sheet having a tensile strength of 590 MPa or greater is used, innovation in the shape of the crash box becomes necessary according thereto. However, the invention described in Patent Literature 1 fails to consider this point at all. Therefore, if a high strength steel sheet is used, the crash box described in Patent Literature 1 may not be able to demonstrate its functions appropriately.

The present invention has been made to solve the above problems and aims to provide a shock absorbing member that is high in energy absorbing efficiency and is stably deformed in a bellows-like manner even if a high strength steel sheet having a high tensile strength is used. Solution to Problem

A shock absorbing member according to the present invention absorbs shock energy by plastic deformation in a bellows-like manner when an axial compression load is received and is in a cylindrical shape, wherein the shock absorbing member is formed of a steel sheet having a tensile strength equal to or greater than 590 MPa, a cross sectional shape of the shock absorbing member is a closed cross section that has twelve vertices and that is approximately cross shaped, the cross sectional shape being orthogonal to an axial direction thereof, an angle α formed by straight lines joining vertices at both ends of a slanted side of an octagon formed by connecting eight vertices of the twelve vertices with straight lines to a vertex therebetween is set to be 120° ≤ α ≤ 150°, an aspect ratio of the cross sectional shape is set to be "1:1" to "2:1", and a ratio between a length of a longer one of a vertical side and a horizontal side of the octagon and a length of an oblique side is set to be "1:1" to "1.5:1".

In the above-described shock absorbing member according to the present invention, at least one stage of bead shape portions that become starting points of the plastic deformation in the bellows-like manner are formed on an external surface of the cylindrical shape, and the bead forming portions are provided such that concave and convex directions of bead shape portions formed on adjacent faces of the same cross section thereof are oppositely directed inwards and outwards.

### Advantageous Effects of Invention

A shock absorbing member according to the present invention is able to be high in energy absorbing efficiency and to be stably deformed in a bellows-like manner even if a high strength steel sheet having a high tensile strength is used.

### Brief Description of Drawings

FIG. 1 is a perspective diagram of a shock absorbing member according to a first embodiment of the present invention.
FIG. 2 is a cross section diagram in a direction orthogonal to an axis of the shock absorbing member according to the first embodiment of the present invention.
FIG. 3 is a diagram illustrating a cross sectional shape of the shock absorbing member according to the first embodiment of the present invention.
FIG. 4 is a diagram illustrating a mode of deformation of the shock absorbing member according to the first embodiment of the present invention.
FIG. 5 is a diagram illustrating a shape used in an experiment for confirming performance of the shock absorbing member according to the first embodiment of the present invention.
FIG. 6 is a graph illustrating a relation between angle α formed by inclined surfaces and energy absorbing efficiency, of the shock absorbing member according to the first embodiment of the present invention.
FIG. 7 is a graph illustrating a relation between aspect ratio and energy absorbing efficiency, of the shock absorbing member according to the first embodiment of the present invention.
FIG. 8 is a graph illustrating a relation between ratio between a vertical side and an oblique side and energy absorbing efficiency, of the shock absorbing member according to the first embodiment of the present invention.
FIG. 9 is a perspective diagram illustrating a shock absorbing member according to a second embodiment of the present invention.

### Description of Embodiments

### [First Embodiment]

A first embodiment of the present invention will be described, based on FIG. 1 to FIG. 6.

A shock absorbing member 1 according to this embodiment is a cylindrical member that absorbs shock energy by plastic deformation in a bellows-like manner when the shock absorbing member 1 receives an axial compression load. The shock absorbing member 1 is formed of a steel sheet having a tensile strength equal to or greater than 590 MPa. In this shock absorbing member 1, a cross sectional shape orthogonal to an axial direction is a closed cross section, which has twelve vertices and which is approximately cross shaped. An angle α, which is formed by straight lines, is set to be 120° ≤ α ≤ 150°, the straight lines joining, vertices at both ends of a slanted side of an octagon formed by connecting eight vertices of the twelve vertices with straight lines, to a vertex between these vertices. An aspect ratio (ratio between a long side and a short side) of the cross sectional shape is set to be "1:1" to "2:1". A ratio between a length of a longer one of a vertical side and a horizontal side of the octagon and a length of an oblique side is set to be "1:1" to "1.5:1".

### <Material and Overall Shape of Shock Absorbing Member>

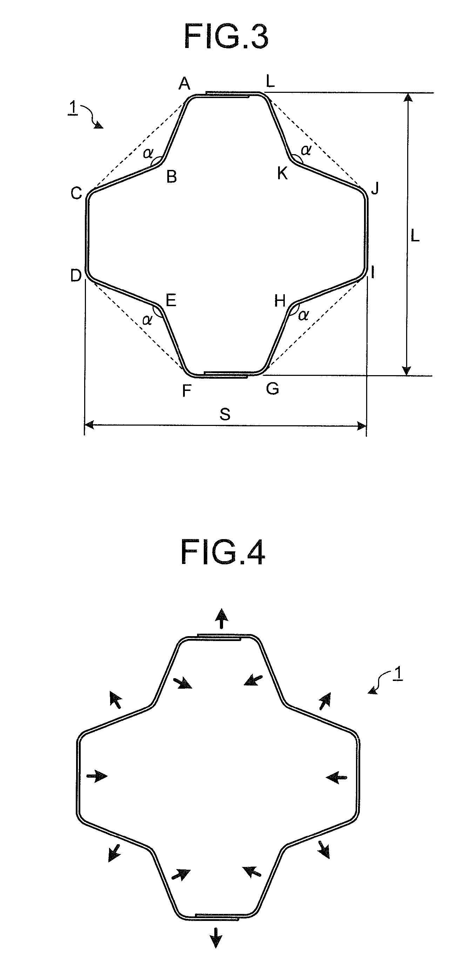

The shock absorbing member 1 is formed of a steel sheet having a tensile strength equal to or greater than 590 MPa. The shock absorbing member 1 is a cylindrical member, and has a cross sectional shape orthogonal to the axial direction, the cross sectional shape being a closed cross section, which has twelve vertices A to L, and which is approximately cross shaped, as illustrated in FIG. 3. The cross sectional shape of the shock absorbing member 1 will be described in detail. A shape formed by joining, with straight lines (the straight lines being displayed with dotted lines in FIG. 3), eight vertices A, C, D, F, G, I, J, and L, excluding four vertices B, E, H, and K which are closer to the center, of the twelve vertices in the cross section of the shock absorbing member 1, is an octagon. The angle α formed by straight lines AB and CB joining vertices, which are at both ends of slanted sides AC, DF, GI, and JL of the octagon, for example, the vertices A and C, to the vertex B between these vertices A and C, is set to be 120° ≤ α ≤ 150° (135° in this example). A ratio (aspect ratio) between a vertical length L and a horizontal length S in the cross sectional shape is set to be "1:1" to "2:1" ("1:1" in this example). The ratio between the length of the longer one of the vertical side and horizontal side and the length of the oblique side is set to be "1:1" to "1.5:1" (in this example, the lengths of the vertical side and horizontal side are the same and the ratio between the lengths of the oblique side or horizontal side and oblique side is "1:1").

The shock absorbing member 1 according to this embodiment, which is configured as described above, is deformed in a bellows-like manner by its material moving inward and outward along the axial direction when the shock absorbing member 1 receives an axial compression load. In a cross section in the direction orthogonal to the axis, as illustrated in FIG. 4, directions of the deformation among the respective ridge lines invert between inward and outward and adjacent faces are deformed oppositely in the inward and outward directions. Therefore, energy absorbed in association with the deformation is increased and energy absorbing efficiency is increased. Directions of arrows in FIG. 4 indicate directions of deformation to convex sides thereof.

As described above, in the shock absorbing member 1 according to this embodiment, the angle α is set to be 120° ≤ α ≤ 150°, the aspect ratio is set to be "1:1" to "2:1", and the ratio between the length of the longer one of the vertical side and horizontal side and the length of the oblique side is set to be "1:1" to "1.5:1". Hereinafter, reasons for setting these as described will be explained based on experimental data.

### <Angle α>

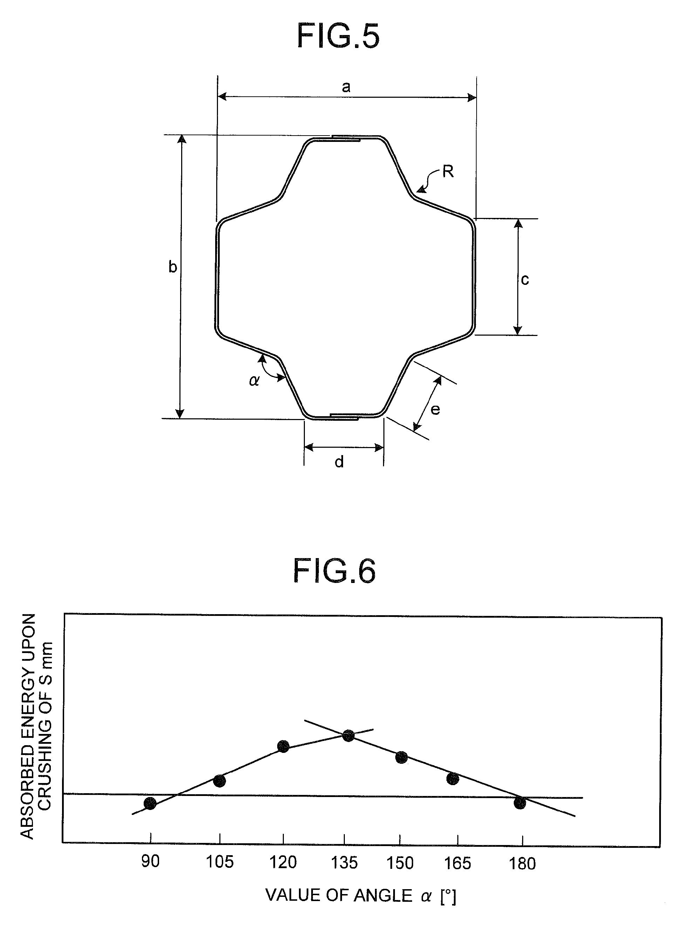

FIG. 5 is a diagram illustrating a cross sectional shape of the shock absorbing member 1 used in an experiment.
A material used in the experiment is a high strength steel sheet having a tensile strength of 590 MPa and dimensions of respective parts are as follows: a = 90.9 mm; b = 104.3 mm; c = 42.6 mm; d = 30.6 mm, R = 5 mm, and α = 135°.

The angle α was changed among 90°, 105°, 120°, 135°, 150°, 165°, and 180° from the basic shape illustrated in FIG. 5, and an absorbed energy upon crushing of S mm of the shock absorbing member 1 in each of these cases was found. A sheet thickness of the steel sheet, which is the material thereof, was adjusted such that a reaction force upon the crushing became equal to or less than a prescribed proof stress. FIG. 6 is a graph illustrating results of the experiment, and a horizontal axis and a vertical axis thereof represent the value of the angle α and the absorbed energy upon the crushing of S mm, respectively.

As illustrated in FIG. 6, the absorbed energy reaches the maximum when the angle α is 135°, and indicates a value that is comparatively large when the angle is 120° ≤ α ≤ 150°. This indicates that the shock absorbing member 1 is stably deformed in a bellows-like manner when the angle α is 120° ≤ α ≤ 150°. The inventors actually have confirmed that when the value of the angle α is in the above range, in a cross section in the direction orthogonal to the axis, directions of the deformation among the respective ridge lines invert between inward and outward and the adjacent faces are deformed oppositely in the inward and outward directions.

The above mentioned deformation inverted between inward and outward occurred when the angle α was in a range equal to or greater than 90° and less than 120°, but due to the high strength of the steel sheet, the force required in the deformation at the inverted portions becomes large, and as a result, variation in the reaction force due to the deformation becomes large and the maximum reaction force became drastically large. Therefore, when the angle α was equal to or greater than 90° and less than 120°, the proof stress was caused to be equal to or less than a prescribed value by adjustment of the sheet thickness, and thus the absorbed energy was reduced as illustrated in FIG. 6.

### <Aspect Ratio>

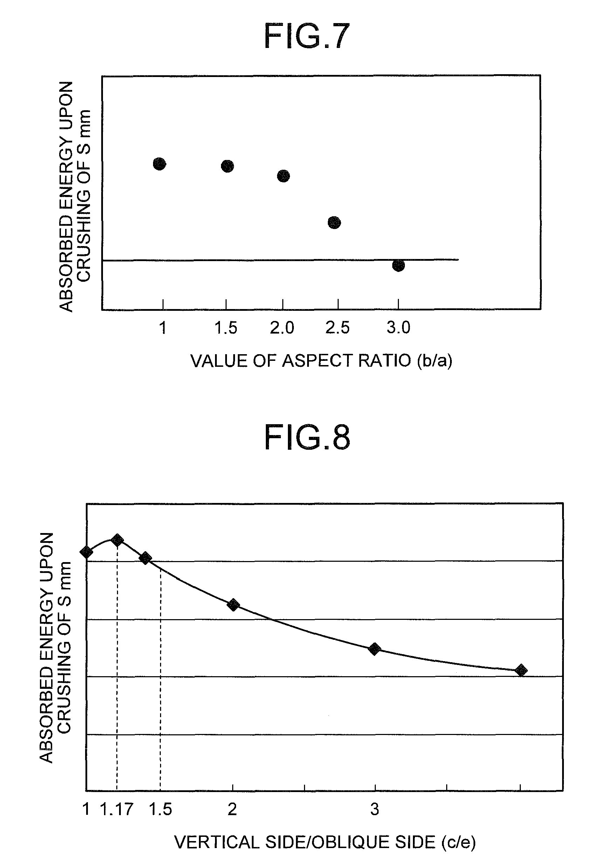

As for the aspect ratio, the aspect ratio (b:a) was changed by changing the dimension c from the basic shape illustrated in FIG. 5, to find the absorbed energy upon crushing of S mm of the shock absorbing member 1 in each case. FIG. 7 is a graph illustrating results of this experiment, and a horizontal axis and a vertical axis thereof represent the value of the aspect ratio (b/a) and the absorbed energy upon the crushing of S mm, respectively.

As illustrated in FIG. 7, when the value of the aspect ratio is "1", the absorbed energy is the largest. Further, when the value of the aspect ratio exceeds "1", the absorbed energy is reduced, but the absorbed energy is high in value until the aspect ratio becomes "2.0". This indicates that the shock absorbing member 1 is stably deformed in a bellows-like manner when the aspect ratio is "1:1" to "2:1". The inventors actually have confirmed that when the value of aspect ratio is in the above range, in a cross section in the direction orthogonal to the axis, directions of the deformation among the respective ridge lines invert between inward and outward and the adjacent faces are deformed oppositely in the inward and outward directions.

### <Ratio Between Length of Longer One of Vertical Side and Horizontal Side and Length of Oblique Side>

As for the ratio between the length of the longer one of the vertical side and horizontal side and the length of the oblique side, by changing the dimension c from the basic shape illustrated in FIG. 5, the ratio between the length of the vertical side (dimension c) and the length of the oblique side (dimension e) was changed and the absorbed energy upon crushing of S mm of the shock absorbing member 1 in each case was found. FIG. 8 is a graph illustrating results of this experiment and a horizontal axis and a vertical axis thereof represent the value of c/e and the absorbed energy upon the crushing of S mm, respectively.

As illustrated in FIG. 8, when the ratio between the length of the vertical side and the length of the oblique side is "1:1" (c/e = 1), the absorbed energy indicates a comparatively large value. Further, when the value of c/e is "1.17", the absorbed energy becomes the maximum, and as the value of the c/e is increased, the value of the absorbed energy is gradually decreased. From the graph illustrated in FIG. 8, the value of c/e is preferably "1.0" to "1.5", and more preferably "1.0" to "1.3". This indicates that when the ratio between the length of the longer one of the vertical side and horizontal side and the length of the oblique side is "1:1" to "1.5:1", the shock absorbing member 1 is stably deformed in a bellows-like manner. The inventors actually have confirmed that when the ratio between the length of the longer one of the vertical side and horizontal side and the length of the oblique side is in the above range, in a cross section in the direction orthogonal to the axis, directions of the deformation among the respective ridge lines invert between inward and outward and the adjacent faces are deformed oppositely in the inward and outward directions.

The case where the vertical side is longer than the horizontal side has been described above, but if the horizontal side is longer than the vertical side, when the ratio between the horizontal side and the oblique side is "1:1" to "1.5:1", even if the shock absorbing member 1 is formed of a steel sheet having a tensile strength equal to or greater than 590 MPa, the shock absorbing member 1 is able to be stably deformed in a bellows-like manner.

### [Second Embodiment]

A shock absorbing member 2 according to a second embodiment of the present invention will be described based on FIG. 9.

The shock absorbing member 2 according to this embodiment has, provided therein, in the one described already as the first embodiment, bead shape portions 3 that become starting points of deformation in a bellows-like manner when the shock absorbing member 2 receives an axial compression load. Only one stage of the bead shape portions 3 are provided on one end side of the shock absorbing member 2. The bead shape portions 3 are provided, such that a bead shape portion 3o protruding outward and a bead shape portion 3i protruding inward are alternately present on each pair of adjacent faces of respective faces of the same cross section thereof.

By provision of the bead shape portions 3 as described above, when the shock absorbing member 2 receives an axial compression load, the mode of deformation is able to be achieved even more stably, the mode of deformation being: the directions of the deformation among the respective ridge lines inverting between inward and outward; and the adjacent faces being deformed oppositely in the inward and outward directions. That is, the higher the tensile strength of the steel sheet is, the more unstable the deformation tends to be, but by the provision of the bead shape portions 3, the bead shape portions 3 effectively function as a trigger of the deformation and the deformation is able to be stabilized. Positions to provide the bead shape portions 3 are preferably on an input side of the axial compression load in the shock absorbing member 2 and set within a range of 1/5 of the entire length of the shock absorbing member 2 from an end portion thereof on the input side.

In the example illustrated in FIG. 9, one stage of the bead shape portions 3 are provided near the end portion on the side where the axial compression load is input. Even if only one stage of the bead shape portions 3 are provided in the axial direction of the shock absorbing member 2, the deformation in a bellows-like manner is stably achieved. However, depending on conditions, such as the entire shape of the shock absorbing member 2 and the angles among the ridge lines, the bead shape portions 3 may be provided in multiple stages in the axial direction, and the shock absorbing member 2 may be more stably deformed in a bellows-like manner when the bead shape portions 3 are provided in multiple stages like that.

### Industrial Applicability

A shock absorbing member according to the present invention is applicable to a member for absorbing energy in a crashworthiness, the member being installed in an automobile or the like.

### Reference Signs List

1, 2 Shock absorbing member
3, 3i, 3o Bead shape portion

## Claims

1. A shock absorbing member that absorbs shock energy by plastic deformation in a bellows-like manner when an axial compression load is received and that is in a cylindrical shape, wherein
the shock absorbing member is formed of a steel sheet having a tensile strength equal to or greater than 590 MPa,
a cross sectional shape of the shock absorbing member is a closed cross section that has twelve vertices and that is approximately cross shaped, the cross sectional shape being orthogonal to an axial direction thereof,
an angle α formed by straight lines joining vertices at both ends of a slanted side of an octagon formed by connecting eight vertices of the twelve vertices with straight lines to a vertex therebetween is set to be 120° ≤ α ≤ 150°,
an aspect ratio of the cross sectional shape is set to be "1:1" to "2:1", and
a ratio between a length of a longer one of a vertical side and a horizontal side of the octagon and a length of an oblique side is set to be "1:1" to "1.5:1".

2. The shock absorbing member according to claim 1, wherein at least one stage of bead shape portions that become starting points of the plastic deformation in the bellows-like manner are formed on an external surface of the cylindrical shape, and the bead forming portions are provided such that concave and convex directions of bead shape portions formed on adjacent faces of the same cross section thereof are oppositely directed inwards and outwards.
